Europäisches Patentamt

European Patent Office

Office européen des brevets

(11) Numéro de publication : **0 407 279 B1**

(12) ## FASCICULE DE BREVET EUROPEEN

(45) Date de publication du fascicule du brevet :
14.09.94 Bulletin 94/37

(51) Int. Cl.⁵ : **H04L 12/44**

(21) Numéro de dépôt : **90401893.4**

(22) Date de dépôt : **29.06.90**

(54) **Réseau de communication entre équipements utilisateurs.**

(30) Priorité : **04.07.89 FR 8908957**

(43) Date de publication de la demande :
**09.01.91 Bulletin 91/02**

(45) Mention de la délivrance du brevet :
**14.09.94 Bulletin 94/37**

(84) Etats contractants désignés :
**AT BE CH DE DK ES FR GB GR IT LI LU NL SE**

(56) Documents cités :
**EP-A- 0 230 549
IEEE JOURNAL ON SELECTED AREAS IN
COMMUNICATIONS, vol. SAC-1, no. 5, novembre 1983, pages 711-720, New York, US ; E.S.
LEE et al. : "The principles and performance of
HUBNET : A 50 Mbit/s glass fiber local area
network"**

(56) Documents cités :
**IEEE GLOBAL TELECOMMUNICATIONS
CONFERENCE, Tokyo, 15-18 novembre 1987,
vol. 2, pages 1410-1414 ; T. SUDA et al. : "Tree
lans with collision avoidance : protocol and
switch architecture"
IEEE GLOBAL TELECOMMUNICATIONS
CONFERENCE, San Diego, novembre 1983,
pages 1152-1154 ; A. ALBANESE : "Star
network with collision-avoidance circuits"**

(73) Titulaire : **Société Anonyme RCE
Immeuble Ordinal,
Rue des Chauffours
F-95002 Cergy-Pontoise Cédex (FR)**

(72) Inventeur : **Despres, Rémis
5 Avenue Jean Moulin
F-78360 Montesson (FR)**

(74) Mandataire : **Dawidowicz, Armand
Cabinet Dawidowicz,
18, Boulevard Pereire
F-75017 Paris (FR)**

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

**Description**

L'invention concerne un réseau de communication entre équipements utilisateurs pour le transfert des messages émis par chaque équipement utilisateur à tous les autres équipements utilisateurs.

Les réseaux de communication connus de ce type présentent cependant divers inconvénients qui nuisent à leur optimisation.

Un réseau connu émet une interrogation systématique de tous les équipements utilisateurs à tour de rôle pour déterminer s'ils désirent émettre un message. Cette interrogation, appelée également jeton, peut être transmise par un bus auquel sont reliés tous les équipements utilisateurs. Il y a donc transmission systématique du tour de parole ou jeton à tous les équipements utilisateurs, ce qui induit un mauvais rendement dès qu'augmentent le taux d'équipements utilisateurs sans message à émettre lorsqu'on les interroge, et le produit du délai maximal de propagation par le débit du support de transmission. Ce type de réseau, qui offre l'avantage de pouvoir utiliser un support passif, ne permet l'introduction de nouveaux équipements utilisateurs qu'au prix d'une grande complexité.

Un autre réseau connu comprend des équipements utilisateurs reliés entre eux selon un anneau. L'interrogation ou jeton circule sur l'anneau et ne s'arrête à un équipement utilisateur que si celui-ci a un message à émettre. Le rendement de ce réseau est en conséquence fortement amélioré mais sa fragilité est importante du fait que tous les équipements utilisateurs sont traversés par les données et par l'interrogation.

On connait également un réseau dans lequel chaque équipement utilisateur assure une écoute permanente des émissions des autres équipements utilisateurs, des moyens de détection a posteriori garantissant la détection des émissions simultanées de message ou collisions. Ce réseau présente l'inconvénient de ne pas garantir de temps de réponse à une demande d'émission par un équipement utilisateur quelconque. En outre, son rendement est également faible, compte-tenu des collisions et des procédures d'attente, de durée aléatoire, avant les tentatives de réémission consécutives à la détection d'une collision, dès que la dimension du réseau et son débit augmentent.

Dans ce dernier type de réseaux, on connait en particulier une structure dite arborescente comportant un équipement d'interconnexion de tête qui comprend au moins deux ports aval reliés chacun par une liaison à un port amont unique d'un équipement d'interconnexion secondaire ou à un équipement utilisateur, chaque équipement d'interconnexion secondaire comportant au moins deux ports aval reliés chacun à un équipement utilisateur ou au port amont d'un autre équipement d'interconnexion secondaire, tout message émis par un équipement utilisateur étant transmis de proche en proche à tous les équipements d'interconnexion et, de là, à chacun des équipements utilisateurs qui leur sont reliés.

On a encore proposé [voir "IEEE JOURNAL ON SELECTED AREAS IN COMMUNICATIONS, vol. SAC-1. n° 5, novembre 1933, pages 711-72, New-York, USA; E.S. LEE et al.] d'utiliser un arbre d'émission et un arbre de sélection, superposés ou séparés, reliés par des contrôleurs d'accès de réseau [NAC]. Cette structure compliquée est onéreuse et son fonctionnement ne donne pas totalement satisfaction.

La présente invention vise à remplacer, dans une telle structure arborescente, l'écoute permanente avec détection de collisions par un mode d'interrogation des équipements utilisateurs qui permette de bonnes performances de l'ensemble du réseau, même lorsque sa dimension et son débit croissent, qui assure un temps de réponse garanti, tout en ne fragilisant pas le réseau et en autorisant une introduction facile de nouveaux équipements utilisateurs.

A cet effet, le réseau selon l'invention est caractérisé en ce que:

- chaque équipement utilisateur est agencé pour n'émettre un message que s'il a préalablement reçu un signal d'autorisation d'émettre,
- chaque équipement utilisateur est agencé pour émettre, après avoir fini d'utiliser le signal d'autorisation, un signal de fin d'émission,
- l'équipement d'interconnexion de tête est agencé pour n'émettre un signal d'autorisation d'émettre sur l'un de ses ports aval que si, pour chaque signal d'autorisation d'émettre qu'il a émis sur un de ses ports aval, il a reçu un signal de fin d'émission sur le même port aval
- chaque équipement d'interconnexion secondaire est agencé pour n'émettre un signal d'autorisation d'émettre sur l'un de ses ports aval que s'il a lui-même reçu un signal d'autorisation d'émettre sur son port amont et si, pour chaque signal d'autorisation d'émettre qu'il a émis sur un de ses ports aval, il a reçu un signal de fin d'émission sur le même port aval,
- chaque équipement d'interconnexion secondaire est agencé pour n'émettre, sur son port amont, un signal de fin d'émission que si, pour chaque signal d'autorisation d'émettre qu'il a émis sur un de ses ports aval, il a reçu un signal de fin d'émission sur le même port.

On assure ainsi que pas plus d'un équipement utilisateur ne peut être en train d'émettre un message au même instant, sans recourir aux systèmes de détection habituellement utilisés, cette garantie étant donnée par le mode de transmission lui-même.

Selon une forme de réalisation du réseau selon l'invention,

- chaque équipement utilisateur est agencé pour émettre, lorsqu'il doit transmettre un message, un signal de demande d'autorisation,

- chaque équipement d'interconnexion est agencé pour n'émettre un signal d'autorisation d'émettre sur l'un de ses ports aval que s'il a reçu sur ce même port un signal de demande d'autorisation,
- chaque équipement d'interconnexion secondaire est agencé pour n'émettre un signal de demande d'autorisation sur son port amont que si chaque signal d'autorisation d'émettre qu'il a reçu sur son port amont a été suivi d'un signal de fin d'émission émis par lui-même sur ce même port amont, et s'il existe un port aval sur lequel il a reçu un nouveau signal de demande d'autorisation sur au moins un de ses ports aval depuis le dernier signal d'autorisation d'émettre émis sur ce port aval.

De cette manière, un signal d'autorisation d'émettre n'est jamais transmis à un équipement utilisateur qui n'a pas émis une demande d'émettre, ni à un autre équipement d'interconnexion secondaire qui n'a pas reçu une telle demande sur l'un de ses ports aval.

L'invention prévoit en outre, selon une forme de réalisation particulièrement avantageuse, que le réseau est agencé de telle manière que les signaux échangés sont matérialisés par des transitions entre des états qui sont signalés de bout en bout sur les liaisons, et que, lorsqu'un état est signalé, il est maintenu au moins jusqu'à ce que les signaux reçus en retour indiquent que l'état considéré a été pris en compte.

Cette forme de réalisation est particulièrement simple et résiste en outre aux perturbations résultant de situations fugitives des transmissions sur les liaisons.

Dans ce cas, de préférence, l'état de demande d'émission est équivalent à l'état d'absence de fin d'émission et l'état de fin d'émission estéquivalent à l'état d'absence de demande d'émission. L'économie ainsi réalisée sur le nombre d'états à transmettre permet des réalisations plus simples du réseau.

Avantageusement, dans le cas de cette forme de réalisation, on peut prévoir que le réseau est agencé de telle manière que

- un seul circuit de transmission, dans chaque sens d'une liaison, est utilisé pour transmettre les messages et les états d'autorisation, d'absence d'autorisation, de fin d'émission et d'absence de fin d'émission,
- sur chaque circuit de transmission, trois types de signaux sont transmis du côté émission et distingués du côté réception, à savoir le repos, les messages et les messages ineffectifs,
- les états d'autorisation et les états de fin d'émission sont matérialisés par l'état de repos,
- la transmission de l'état d'autorisation sur une liaison aval est, le cas échéant, différée jusqu'à la fin de l'émission d'un message en cours.

Les ports des éléments d'interconnexion sont constitués chacun d'un module comprenant :

- un récepteur qui signale sur une sortie les détections de l'état de repos,
- un émetteur qui émet un signal de repos si la commande est activée,
- un connecteur qui connecte au bus si sa commande est activée, l'élément d'interconnexion comprenant en outre un régénérateur qui régénère les messages et, en l'absence de message à régénérer, émet des messages ineffectifs et signale qu'il le fait sur la sortie.

L'invention sera bien comprise à la lecture de la description suivante faite en se référant au dessin annexé dans lequel:

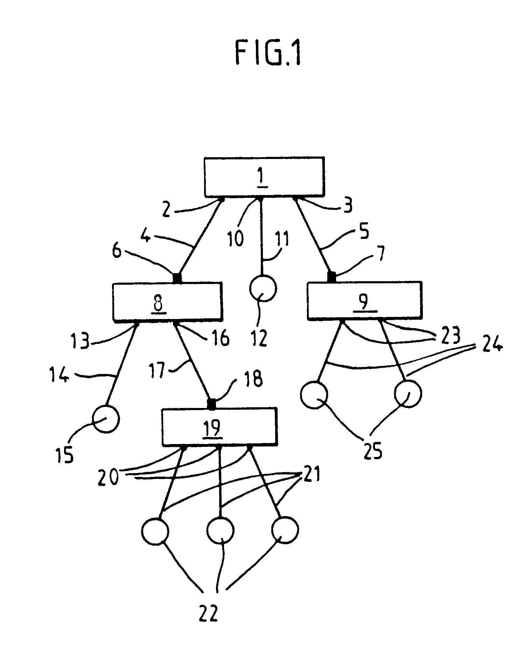

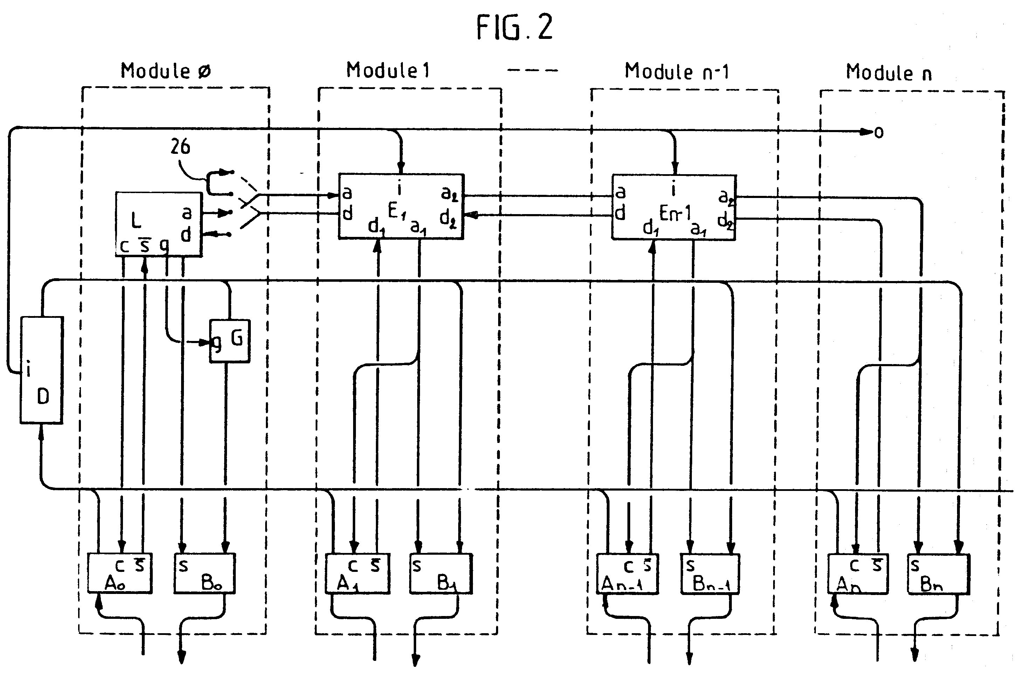

La figure 1 est un schéma d'un réseau arborescent selon un exemple de réalisation de l'invention; et la figure 2 est un schéma d'un équipement d'interconnexion secondaire du réseau de la figure 1, pour une forme de réalisation.

Dans l'exemple représenté à la figure 1, le réseau comprend un équipement d'interconnexion de tête (EIT) 1 dont les ports aval 2 et 3 sont reliés par des liaisons 4 et 5, respectivement aux ports amont 6 et 7 d'équipements d'interconnexion secondaires (EIS) 8 et 9. Un troisième port aval 10 de l'équipement d'interconnexion principal 1 est relié par une liaison 11 à un équipement utilisateur 12.

Un port aval 13 de l'EIS 8 est relié par une liaison 14 à un équipement utilisateur 15 et son second port aval 16 est relié, par une liaison 17, au port amont 18 d'un équipement d'interconnexion secondaire 19. Les trois ports aval 20 de l'EIS 19 sont reliés respectivement par trois liaisons 21 à trois équipements utilisateurs 22.

Les deux ports aval 23 de l'équipement d'interconnexion 9 sont reliés, par deux liaisons 24, respectivement à deux équipements utilisateurs 25.

Chaque équipement d'interconnexion, qui est un répéteur multiport, comprend donc au moins deux ports aval. Chaque équipement d'interconnexion secondaire comprend en outre un port amont unique.

Tous les messages (M) émis par les équipements utilisateurs sur leur liaison respective sont diffusés de proche en proche par les équipements d'interconnexion secondaires et principal de manière à être reçus par tous les autres équipements utilisateurs.

La structure qui vient d'être décrite est une structure arborescente classique.

Conformément à l'invention, chaque équipement utilisateur (12, 15, 22, 25) n'émet un message (M) (ou une suite de messages) que s'il a préalablement reçu un signal d'autorisation d'émettre A.

Chaque équipement utilisateur (12, 15, 22, 25) émet un signal de fin d'émission F après avoir fini d'utiliser le signal A. Il doit alors recevoir un nouveau signal A avant d'émettre un nouveau message.

Chaque EIS (8, 9, 19) n'émet un signal A sur un de ses ports aval que s'il a lui-même reçu un signal A sur son port amont, et si, pour chaque signal A qu'il a émis sur un port aval, il a reçu un signal F sur le même port aval.

En outre, chaque EIS (8, 9, 19) émet, sur son port amont, un signal F uniquement si, pour chaque signal A qu'il a émis sur un port aval, il a reçu un signal F sur le même port.

Donc, pas plus d'un équipement utilisateur (12, 15, 22, 25) ne peut émettre un message M au même instant.

L'invention prévoit en outre, dans une forme de réalisation préférée, que chaque équipement utilisateur (12, 15, 22, 25) comporte des moyens pour émettre un signal de demande d'autorisation (D) lorsqu'il est utile qu'il reçoive un signal A, c'est-à-dire lorsqu'il désire émettre un message M.

Dans ce cas, chaque équipement d'interconnexion principal (1) ou secondaire (8, 9, 19) ne transmet un signal A sur un port aval que s'il a préalablement reçu un signal D sur ce même port aval. L'émission d'un signal A est donc subordonnée à la réception d'un signal D. En outre, chaque EIS (8, 9, 19) n'émet sur son port amont un signal D que si chaque signal A qu'il a reçu sur son port amont a été suivi par un signal F émis par lui-même sur ce même port amont et si il a reçu un signal D sur au moins un port aval depuis le dernier signal F émis.

Cette forme de réalisation permet de n'adresser un signal A qu'à un équipement utilisateur qui a émis un signal D, le signal F suivant le dernier signal A ayant été reçu.

Selon une forme de réalisation particulièrement simple de l'invention, les signaux A, F et éventuellement D sont matérialisés par des transitions entre des états qui sont matérialisés de bout en bout sur la liaison correspondante. Lorsqu'un état est signalé, il est maintenu au moins jusqu'à ce que les signaux reçus en retour indiquent que l'état considéré a été pris en compte.

Le signal A est matérialisé par une transition de l'état $(\bar{a})$ à l'état $(a)$, le signal F par une transition de l'état $(\bar{f})$ à l'état $(f)$ et, dans le cas du signal D, par la transition de l'état $(\bar{d})$ à l'état $(d)$.

On obtient ainsi une structure particulièrement simple et pratiquement insensible aux perturbations résultant de situations fugitives des transmissions sur les liaisons.

On peut encore simplifier la structure en regroupant alors les états f, $\bar{f}$, d et $\bar{d}$ sous la forme:

$$f = \bar{d} \text{ (et } \bar{f} = d).$$

Avantageusement, dans ce cas, on utilise un seul circuit de transmission, dans chaque sens d'une liaison, pour transmettre les messages M et les états a, $\bar{a}$, f, $\bar{f}$ et trois types de signaux qui sont transmis du côté émission et distingués du côté réception: le repos R, les messages M, et les messages ineffectifs I, la distinction entre le repos R et les autres signaux M et I étant facile à effectuer sur chacun des ports.

Les états (a) et $(f = \bar{d})$ sont matérialisés par les signaux R et, par voie de conséquence, les états $(\bar{a})$ et $(\bar{f} = d)$ par les signaux M ou I.

Dans ce cas, la transmission de l'état (a) sur une liaison aval est, le cas échéant, différée jusqu'à la fin de l'émission d'un message M en cours puisque l'émission simultanée du signal S qui caractérise la fin de message et la dernière partie de ce message lui-même est impossible.

Le fait que la transition de l'état (a) à l'état $(\bar{a})$ soit le seul moyen de signaler à l'autre extrémité de la liaison que l'état $(f = \bar{d})$ a été reconnu, de façon à lui permettre de passer à l'état $(d = \bar{f})$, implique alors que l'état (a) soit maintenu au moins jusqu'à la réception de l'état $(f = \bar{d})$.

Cette réalisation permet l'utilisation de moyens de transmission particulièrement économiques.

Selon un exemple de réalisation, le moyen de transmission utilise le codage des messages en mode synchrone par la procédure HDLC, avec les définitions suivantes:

- le repos R, suite de 1 de longueur supérieure à 6, ou dans le cas de l'utilisation d'un modem, absence de signal au niveau physique (absence de porteuse), ou
- la transmission de messages ineffectifs I, suites de fanions (01111110), et
- les messages M proprement dits, constitués de trames au sens HDLC.

Si on se réfère à la figure 2, qui représente un équipement d'interconnexion à (n) ports aval constitués de (n) modules numérotés de 1 à $\underline{n}$ et d'un module numéroté 0 relié au port amont.

Chaque module comprend :
- un récepteur (A) qui signale sur une sortie $(\bar{s})$ les détections de l'état de non-repos et qui se connecte au bus si sa commande $(\underline{c})$ est activée,
- un émetteur (B) qui émet un signal de repos si la commande $(\underline{s})$ est activée.

L'équipement d'interconnexion comprend en outre un régénérateur (D) qui régénère les messages (M) et, en l'absence de message (M) à régénérer, émet des messsages ineffectifs (I) et signale qu'il le fait sur la sortie $(\underline{i})$.

Chacun des modules 1 à n-1 est commandé par une logique E dont les équations sont:

set d si $\bar{a}$ et $(d_1$ ou $d_2)$
reset d si $\bar{d}_2$ et $(\bar{d}_1$ ou $a_2)$
set $a_1$ si d et a et $d_1$ et $\bar{a}_2$ et i
reset $a_1$ si $\bar{d}$ ou $\bar{a}$ ou $a_2$
set $a_2$ si d et a et $d_2$ et $\bar{d}_1$
reset $a_2$ si $\bar{d}$ ou $\bar{a}$.

Lorsque a est reçu, $a_1$ est émis tant que $d_1$ est reçu, puis $a_2$ est émis tant que $d_2$ est reçu, puis d cesse d'être émis.

L'émission de $a_1$ est différée jusqu'à ce que la régénération et la transmission de tout message M soit terminée.

Le module O comprend une logique combinatoire de commande L dont les équations sont :

$$a = s$$
$$c = \bar{s}$$
$$g = d \text{ et } \bar{s}$$

Un générateur G force l'émission, de messages ineffectifs (I) en direction de l'émetteur B du module ø, lorsque son port g est activé.

Cet assemblage assure que l'équipement d'interconnexion EI, s'il dispose d'une autorisation reçue sur son port ø, l'attribue à tour de rôle à chacun de ses ports aval qui est demandeur, lorsque son tour vient, puis signale une fin d'utilisation de son autorisation.

La liaison 26 en pointillé illustre la connexion directe d-a. Dans l'équipement d'interconnexion de tête, le module ø peut être supprimé et remplacé par une connexion directe d-a (26) au niveau de la logique $E_1$.

## Revendications

1. Réseau de communication entre équipements utilisateurs pour le transfert des messages émis par chaque équipement utilisateur à tous les autres équipements utilisateurs, dans lequel un équipement d'interconnexion de tête (1) comprend au moins deux ports aval (2, 3) reliés chacun par une liaison (4, 5) à un port amont unique (6, 7) d'un équipement d'interconnexion secondaire (8,9) ou à un équipement utilisateur (12), chaque équipement d'interconnexion secondaire (8, 9, 19) comportant au moins deux ports aval (13, 16, 23, 29) reliés chacun à un équipement utilisateur (15, 22, 25) ou au port amont (18) d'un autre équipement d'interconnexion secondaire (19), tout message émis par un équipement utilisateur (12, 15, 22, 25) étant transmis de proche en proche à tous les équipements d'interconnexion (1, 8, 9, 19) et, de là, à chacun des équipements utilisateurs (12, 15, 22, 25) qui leur sont reliés, caractérisé en ce que:

- chaque équipement utilisateur (12, 15, 22, 25) est agencé pour n'émettre un message que s'il a préalablement reçu un signal d'autorisation d'émettre,
- chaque équipement utilisateur (12, 15, 22, 25) est agencé pour émettre, après avoir fini d'utiliser le signal d'autorisation, un signal de fin d'émission,
- l'équipement d'interconnexion de tête est agencé pour n'émettre un signal d'autorisation d'émettre sur l'un de ses ports aval (2, 3) que si, pour chaque signal d'autorisation d'émettre qu'il a émis sur un de ses ports aval (2, 3), il a reçu un signal de fin d'émission sur le même port aval (2, 3),
- chaque équipement d'interconnexion secondaire (8, 9, 19) est agencé pour n'émettre un signal d'autorisation d'émettre sur l'un de ses ports aval (13, 16, 20, 23) que s'il a lui-même reçu un signal d'autorisation d'émettre sur son port amont (6, 7, 18) et si, pour chaque signal d'autorisation d'émettre qu'il a émis sur un de ses ports aval (13, 16, 20, 23), il a reçu un signal de fin d'émission sur le même port aval (13, 16, 20, 23),
- chaque équipement d'interconnexion secondaire (8, 9, 19) est agencé pour n'émettre sur son port amont (6, 7, 18), un signal de fin d'émission que si, pour chaque signal d'autorisation d'émettre qu'il a émis sur un de ses ports aval (13, 16, 20, 23), il a reçu un signal de fin d'émission sur le même port (13, 16, 20, 23).

2. Réseau de communication selon la revendication 1,
caractérisé en ce que:
- chaque équipement utilisateur [12, 15, 22, 25] est agencé pour émettre, lorsqu'il doit transmettre un message, un signal de demande d'autorisation,
- chaque équipement d'interconnexion (1, 8, 9, 19) est agencé pour n'émettre un signal d'autorisation d'émettre sur l'un de ses ports aval (2, 3, 10, 13, 16, 20, 23) que s'il a reçu sur ce même port un signal de demande d'autorisation,
- chaque équipement d'interconnexion secondaire (8, 9, 19) est agencé pour n'émettre un signal de demande d'autorisation sur son port amont (6, 7, 18) que si chaque signal d'autorisation d'émettre qu'il a reçu sur son port amont (6, 7, 18) a été suivi d'un signal de fin d'émission émis par lui-même sur ce même port amont (6, 7, 18), et s'il existe un port aval (13, 16, 20, 23) sur lequel il a reçu un nouveau signal de demande d'autorisation depuis le dernier signal d'autorisation d'émettre émis sur ce port aval (13, 16, 20, 23).

3. Réseau de communication selon l'une des revendications 1 et 2,
caractérisé en ce qu'il est agencé de telle manière que les signaux échangés sont matérialisés par des transitions entre des états qui sont signalés de bout en bout sur les liaisons, et que, lorsqu'un état est signalé, il est maintenu au moins jusqu'à ce que les signaux reçus en retour indiquent que l'état considéré a été pris en compte.

4. Réseau selon la revendication 2 et la revendication 3, caractérisé en ce que l'état de demande d'émission (d) est équivalent à l'état d'absence de fin d'émission (f̄) et l'état de fin d'émission (f) est équivalent à l'état d'absence de demande d'émission (d̄).

5. Réseau selon la revendication 4, caractérisé en ce qu'il est agencé de telle manière que

- un seul circuit de transmission, dans chaque sens d'une liaison, est utilisé pour transmettre les messages (M) et les états d'autorisation (a), d'absence d'autorisation (ā), de fin d' émission (f) et d'absence de fin d'émission (f̄),
- sur chaque circuit de transmission, trois types de signaux sont transmis du côté émission et distingués du côté réception, à savoir le repos (R), les messages (M) et les messages ineffectifs (I),
- les états d'autorisations (a) et les états de fin de message (f = d̄) sont matérialisés par l'état de repos (R),
- la transmission de l'état d'autorisation (a) sur une liaison aval est,le cas échéant, différée jusqu'à la fin de l'émission d'un message (M) en cours.

6. Réseau selon la revendication 5, caractérisé en ce que les ports (2, 3, 6, 7, 13, 16, 23, 20) des éléments d'interconnexion sont constitués chacun d'un nodule comprenant :

- un récepteur (A) qui signale sur une sortie (s) les détections de l'état de repos,
- un émetteur (B) qui émet un signal de repos si la commande (s) est activée,
- un connecteur (C) qui connecte au bus si sa commande (c) est activée,

l'élément d'interconnexion comprenant en outre un régénérateur (D) qui régénère les messages (M) et, en l'absence de message (M) à régénérer, émet des messages ineffectifs (I) et signale qu'il le fait sur la sortie (i).

**Patentansprüche**

1. Kommunikationsnetz zwischen Teilnehmereinrichtungen zur Übertragung von Nachrichten, die von jeder Teilnehmereinrichtung an alle anderen Teilnehmereinrichtungen gesendet werden, in welchem eine Hauptverbindungseinrichtung (1) wenigstens zwei abwärts angeordnete Schnittstellen (2, 3)aufweist, die jede über eine Verbindung (4, 5) an eine einzige aufwärts angeordnete Schnittstelle (6,7) einer zweiten Verbindungseinrichtung (8, 9) oder an eine Teilnehmereinrichtung (12) angeschlossen sind, wobei jede zweite Verbindungseinrichtung (8, 9, 19) wenigstens zwei abwärts angeordnete Schnittstellen (13, 16, 23, 29) aufweist, die jede an eine Teilnehmereinrichtung (15, 22, 25) oder eine aufwärts angeordnete Schnittstelle (18) einer anderen zweiten Verbindungseinrichtung (19) angeschlossen ist, wobei jede Nachricht, die von einer Teilnehmereinrichtung (12, 15, 22, 25) ausgesandt wird, von Ort zu Ort zu allen Verbindungseinrichtungen (1, 8, 9, 19) und von dort aus an jede der daran angeschlossenen Teilnehmereinrichtungen (12, 15, 22, 25) übertragen wird, **dadurch gekennzeichnet,** daß

- jede Teilnehmereinrichtung (12, 15, 22, 25) darauf eingerichtet ist, nur dann eine Nachricht auszusenden, wenn sie zuvor ein Sendeerlaubnissignal empfangen hat,
- jede Teilnehmereinrichtung (12, 15, 22, 25) darauf eingerichtet ist, nach dem Ende der Benutzung des Sendeerlaubnissignals ein Sendeschlußsignal zu senden,
- die Hauptverbindungseinrichtung darauf eingerichtet ist, nur dann ein Sendeerlaubnissignal über eine ihrer abwärts angeordneten Schnittstellen (2, 3) zu senden, wenn sie für jedes Sendeerlaubnissignal, das sie über eine ihrer abwärts angeordneten Schnittstellen (2, 3) gesendet hat, über dieselbe abwärts angeordnete Schnittstelle (2, 3) ein Sendeschlußsignal empfangen hat,
- jede zweite Verbindungseinrichtung (8, 9, 19) darauf eingerichtet ist, nur dann ein Sendeerlaubnissignal über eine ihrer abwärts angeordneten Schnittstellen (13, 16, 20, 23) auszusenden, wenn sie selbst ein Sendeerlaubnissignal über ihre aufwärts angeordnete Schnittstelle (6, 7, 18) empfangen hat und wenn sie für jedes Sendeerlaubnissignal, das sie über eine ihrer abwärts angeordneten Schnittstellen (13, 16, 20, 23) gesendet hat, ein Sendeschlußsignal über dieselbe abwärts angeordnete Schnittstelle (13, 16, 20, 23) empfangen hat,
- jede zweite Verbindungseinrichtung (8, 9, 19) darauf eingerichtet ist, nur dann über ihre aufwärts angeordnete Schnittstelle (6, 7, 18) ein Sendeschlußsignal zu senden, wenn sie für jedes Sendeerlaubnissignal, das sie über eine ihrer abwärts angeordneten Schnittstellen (13, 16, 20, 23) gesendet hat, ein Sendeschlußsignal über dieselbe Schnittstelle (13, 16, 20, 23) empfangen hat.

2. Kommunikationsnetz nach Anspruch 1, **dadurch**

**gekennzeichnet,** daß

- jede Teilnehmereinrichtung (12, 15, 22, 25) darauf eingerichtet ist, ein Erlaubnisanforderungssignal zu senden, wenn sie eine Nachricht zu übertragen hat,
- jede Verbindungseinrichtung (1, 8, 9, 19) darauf eingerichtet ist, nur dann ein Sendeerlaubnissignal über eine ihrer abwärts angeordneten Schnittstellen (2, 3, 10, 13, 16, 20, 23) auszusenden, wenn sie über dieselbe Schnittstelle ein Erlaubnisanforderungssignal empfangen hat,
- jede zweite Verbindungseinrichtung (8, 9, 10) darauf eingerichtet ist, nur dann ein Erlaubnisanforderungssignal über ihre aufwärts angeordnete Schnittstelle (6, 7, 18) zu senden, wenn auf jedes Sendeerlaubnissignal, das sie über ihre aufwärts angeordnete Schnittstelle (6, 7, 18) empfangen hat, ein Sendeschlußsignal gefolgt ist, das von ihr selbst über dieselbe aufwärts angeordnete Schnittstelle (6, 7, 18) gesendet worden ist und wenn es eine abwärts angeordnete Schnittstelle (13, 16, 20, 23) gibt, über die sie seit dem letzten über diese abwärts angeordnete Schnittstelle (13, 16, 20, 23) gesendeten Sendeerlaubnissignal ein neues Erlaubnisanforderungssignal empfangen hat.

3. Kommunikationsnetz nach einem der Ansprüche 1 und 2, **dadurch gekennzeichnet,** daß es derart eingerichtet ist, daß die untereinander ausgetauschten Signale durch Zustandsübergänge verwirklicht sind, die über die Verbindungen von einem Ende zum anderen signalisiert werden, und daß, wenn ein Zustand signalisiert worden ist, er wenigstens aufrechterhalten wird, bis die im Gegenzug empfangenen Signale anzeigen, daß der betrachtete Zustand zur Kenntnis genommen worden ist.

4. Netz nach Anspruch 2 und Anspruch 3, **dadurch gekennzeichnet,** daß der Zustand der Sendeanforderung (d) gleichbedeutend mit dem Zustand des Fehlens des Sendeschlusses ($\bar{f}$) ist und der Zustand des Sendeschlusses (f) gleichbedeutend mit dem Zustand des Fehlens der Sendeanforderung ($\bar{d}$) ist.

5. Netz nach Anspruch 4, **dadurch gekennzeichnet,** daß es derart eingerichtet ist, daß

- ein einziger Übertragungsschaltkreis in jeder Richtung einer Verbindung benutzt wird, um die Nachrichten (M) und die Zustände der Erlaubnis (a), des Fehlens der Erlaubnis ($\bar{a}$), des Sendeschlusses (f) und Fehlen des Sendeschlusses ($\bar{f}$) zu übertragen,

- an jedem Übertragungsschaltkreis drei Arten von Signalen von der Sendeseite übertragen und von der Empfangsseite unterschieden werden, nämlich der Ruhezustand (R), die Nachrichten (M) und die unwirksamen Nachrichten (I),
- die Zustände der Erlaubnis (a) und die Zustände des Endes der Nachricht (f = $\bar{d}$) durch den Ruhezustand (R) verwirklicht sind,
- die Übertragung des Zustandes der Erlaubnis (a) über eine abwärts angeordnete Verbindung gegebenenfalls verzögert wird bis zum Ende der Übertragung einer gegenwärtigen Nachricht (M).

6. Netz nach Anspruch 5, **dadurch gekennzeichnet,** daß die Schnittstellen (2, 3, 6, 7, 13, 16, 23, 20) der Verbindungsteile jede durch eine Baugruppe gebildet sind, die umfaßt

- einen Empfänger (A), der über einen Ausgang (s) die Detektierungen des Ruhezustandes signalisiert,
- einen Sender (B), der ein Ruhesignal sendet, wenn der Befehl (s) aktiviert ist,
- ein Verbindungsteil (C), das eine Verbindung mit dem Bus herstellt, wenn sein Befehl (c) aktiviert ist,

wobei das Verbindungsteil darüber hinaus einen Regenerator (D) aufweist, der die Nachrichten (M) regeneriert und bei Fehlen einer zu regenerierenden Nachricht (M) unwirksame Nachrichten (I) sendet und über den Ausgang (i) anzeigt, das er dies tut.

**Claims**

1. Communication network between user units for transferring messages transmitted by each user unit to all the other user units, in which a head interconnection unit (1) comprises at least two output ports (2, 3) each connected by a link (4, 5) to a single input port (6, 7) of a secondary interconnection unit (8, 9) or to a user unit (12), each secondary interconnection unit (8, 9, 19) having at least two output ports (13, 16, 23, 29) each connected to a user unit (15, 22, 25) or to the input port (18) of another secondary interconnection unit (19), any message transmitted by a user unit (12, 15, 22, 25) being transmitted step by step to all the interconnection units (1, 8, 9, 19) and from there to each of the user units (12, 15, 22, 25) connected to them, characterised in that:

- each user unit (12, 15, 22, 25) is arranged so as to transmit a message only if it has previous received a transmission-enable signal,

- each user unit (12, 15, 22, 25) is arranged so as to transmit, after finishing using the enable signal, an end-of-transmission signal,
- the head interconnection unit is arranged so as to transmit a transmission-enable signal at one of its output ports (2, 3) only if, for each transmission-enable signal which it has transmitted at one of its output ports (2, 3), it has received an end-of-transmission signal at the same output port (2, 3),
- each secondary interconnection unit (8, 9, 19) is arranged so as to transmit a transmission-enable signal at one of its output ports (13, 16, 20, 23) only if it has itself received a transmission-enable signal at its input port (6, 7, 18) and if, for each transmission-enable signal which it has transmitted at one of its output ports (13, 16, 20, 23), it has received an end-of-transmission signal at the same output port (13, 16, 20, 23),
- each secondary interconnection unit (8, 9, 19) is arranged so as to transmit, at its input port (6, 7, 18), an end-of-transmission signal only if, for each transmission-enable signal which it has transmitted at one of its output ports (13, 16, 20, 23), it has received an end-of-transmission signal at the same port (13, 16, 20, 23).

2. Communication network according to Claim 1, characterised in that:
   - each user unit (12, 15, 22, 25) is arranged so as to transmit, when it has to transmit a message, an enable-request signal,
   - each interconnection unit (1, 8, 9, 19) is arranged so as to transmit a transmission-enable signal at one of its output ports (2, 3, 10, 13, 16, 20, 23) only if it has received, at the same port, an enable-request signal,
   - each secondary interconnection unit (8, 9, 19) is arranged so as to transmit an enable-request signal, at its input port (6, 7, 18), only if each transmission-enable signal which it has received at its input port (6, 7, 18) has been followed by an end-of-transmission signal transmitted by itself at this same input port (6, 7, 18), and if there is an output port (13, 16, 20, 23) at which it has received a further enable-request signal since the last enable-request signal transmitted at this output port (13, 16, 20, 23).

3. Communication network according to one of Claims 1 and 2, characterised in that it is arranged so that the signals exchanged result in transitions between states which are signalled from end to end over the links, and in that, when a state is signalled, it is maintained until the signals received in return indicate that the state in question has been taken into account.

4. Network according to Claim 2 and Claim 3, characterised in that the transmission request state (d) is equivalent to the absence of end-of-transmission state ($\bar{f}$) and the end-of-transmission state ($\bar{f}$) is equivalent to the absence of transmission request state ($\bar{d}$).

5. Network according to Claim 4, characterised in that it is arranged so that
   - a single transmission circuit, in each direction of a link, is used to transmit the messages (M) and the enabling states (a), absence of enabling state ($\bar{a}$), end of transmission states (f) and absence of end of transmission states ($\bar{f}$),
   - on each transmission circuit three types of signal are transmitted on the transmission side and distinguished from the reception side, namely idle (R), messages (M) and ineffective messages (I),
   - the enabling states (a) and the end of message states ($f = \bar{d}$) are expressed by the idle state (R),
   - the transmission of the enabling state (a) over an input link is, where applicable, deferred until the end of transmission of a current message (M).

6. Network according to Claim 5, characterised in that the ports (2, 3, 6, 7, 13, 16, 23, 20) of the interconnection components each consist of a module comprising:
   - a receiver (A) which signals, at an output ($\underline{s}$), that the idle state has been detected,
   - a transmitter (B) which transmits an idle signal if the command ($\underline{s}$) is activated,
   - a connector (C) which connects to the bus if its command ($\underline{c}$) is activated,

   the interconnection component also comprising a regenerator (D) which regenerates the messages (M) and, in the absence of any message (M) to be regenerated, transmits ineffective messages (I) and signals that it is doing so at the output ($\underline{i}$)

# FIG.1

# FIG.2

EP 0 407 279 B1